(19)

Europäisches
Patentamt
European
Patent Office
Office européen
des brevets

(11) **EP 4 079 796 A1**

(12) **EUROPEAN PATENT APPLICATION**
published in accordance with Art. 153(4) EPC

(43) Date of publication:
**26.10.2022 Bulletin 2022/43**

(21) Application number: **20901219.4**

(22) Date of filing: **17.12.2020**

(51) International Patent Classification (IPC):
***C08J 9/18*** *(2006.01)*

(52) Cooperative Patent Classification (CPC):
**C08J 9/18**

(86) International application number:
**PCT/JP2020/047158**

(87) International publication number:
**WO 2021/125264 (24.06.2021 Gazette 2021/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.12.2019 JP 2019228597**

(71) Applicant: **Asahi Kasei Kabushiki Kaisha
Tokyo 1000006 (JP)**

(72) Inventors:
• **FUJINO Yoshinori
Tokyo 100-0006 (JP)**
• **ONOE Takashi
Tokyo 100-0006 (JP)**

(74) Representative: **D Young & Co LLP
120 Holborn
London EC1N 2DY (GB)**

(54) **METHOD FOR PRODUCING POLYAMIDE RESIN FOAMED PARTICLES**

(57)     The present disclosure is directed to provide a method of producing polyamide resin foamable particles at a low foaming temperature. A method of producing polyamide resin foamable particles of the present disclosure include forming a foamable polyamide resin, into which a polar solvent and a foaming agent are made to be included, into a polyamide resin.

EP 4 079 796 A1

**Description**

TECHNICAL FIELD

The present disclosure relates to a method of producing polyamide resin foamable particles.

BACKGROUND

Techniques for producing a foamed article of a resin include extrusion foaming, bead foaming, injection foam molding, and the like. In extrusion foaming, a foaming agent is introduced into a molten resin under pressurizing using an extruder, and the pressurizing is released at the outlet of the extruder to obtain a sheet or columnar foamed article. In bead foaming, resin particles having foamability are filled in a mold, heated with water vapor or the like, so that particles are fused together simultaneously with expansion to thereby obtain a foam molded article. In injection foam molding, a foaming agent is introduced into a molten resin under pressurizing using an extruder, and the resin is caused to foam in an injection molding die to thereby obtain a foam molded article. Among these techniques, bead foaming is widely used in industry due to advantages such as ease of freely setting the product shape, ease of obtaining a foam molded article with a high expansion ratio, and so forth.

In recent years, materials with light weight and high functionality have been demanded in the automobile industry. There is a strong need for engineering resins having an excellent heat resistance, particularly polyamide foam molded articles excellent in chemical resistance and abrasion resistance. In particular, development of foam molded articles made from resin particles having foamability (bead foamable particles) has been demanded to achieve ease of freely setting the shape of molded articles.

For example, PTL 1 discloses the method in which an inert gas is introduced into a molten resin under pressurizing to thereby produce a foamed article.

CITATION LIST

Patent Literature

PTL 1: JP H02-024329 A

SUMMARY

(Technical Problem)

Because polyamide resins are crystalline resins having high melting points, and production of molded articles requires polyamide resins to be heated at high temperatures, as disclosed in PTL 1. heating at high temperatures is also required in production of foamable particles used in bead foaming, and a method of lowering the foaming temperature has been demanded.

Accordingly, the present disclosure is directed to provide a method of producing polyamide resin foamable particles at a low foaming temperature.

(Solution to Problem)

The present disclosure thus provides the following.

(1) A method of producing polyamide resin foamable particles comprising:
foaming a foamable polyamide, into which a polar solvent and a foaming agent are made to be included, into a polyamide resin.
(2) The method of producing polyamide resin foamable particles according to (1), comprising making the foaming agent to be included into a solvent-including polyamide resin, into which the polar solvent is made to be included, to obtain the foamable polyamide resin.
(3) The method of producing polyamide resin foamable particles according to (1), comprising making a polar solvent to be further included in a solvent and foaming agent-including polyamide resin, into which the polar solvent and the foaming agent are made to be impregnated, to obtain the foamable polyamide resin.
(4) The method of producing polyamide resin foamable particles according to any one of (1) to (3), wherein the step of making the polar solvent to be included and the step of making the foaming agent to be included are separate steps.
(5) A method of producing polyamide resin foamable particles according to any one of (1) to (4), comprising the step of removing at least a portion of the polar solvent adhered to a surface before the foaming the foamable polyamide resin.

(6) The method of producing polyamide resin foamable particles according to any one of (1) to (5), wherein an average particle diameter of the polyamide resin foamable particles is 0.5 to 1.3 mm.

(7) The method of producing polyamide resin foamable particles according to any one of (1) to (6), wherein a temperature upon the foaming is (Tm - 30) °C to (Tm + 10) °C where Tm is a melting point of the polyamide resin.

(8) The method of producing polyamide resin foamable particles according to any one of (1) to (7), wherein a mass ratio of the polar solvent in the foamable polyamide resin is 3 to 30 mass% per 100 mass% of the polyamide resin.

(Advantageous Effect)

According to the present disclosure, polyamide resin foamable particles can be produced at a low foaming temperature.

DETAILED DESCRIPTION

A preferred embodiment of the present disclosure will be described in detail below. The present disclosure, however, is not limited to the following embodiment.

A method of producing polyamide resin foamable particles of the present embodiment includes foaming a foamable polyamide resin into which a polar solvent and a foaming agent are made to be included in a polyamide resin serving as the raw material.

In the production method of the present embodiment, the foaming agent may be made to be included after the polar solvent is made to be included into the polyamide resin, or the polar solvent may be made to be included after the foaming agent is made to be included into the polyamide resin, or the polar solvent and the foaming agent may be made to be simultaneously included into the polyamide resin. In addition, when the polar solvent or the foaming agent is made to be included, the polar solvent and/or the foaming agent may be made to be included portionwise in multiple times. In the case where the polar solvent and/or the foaming agent are made to be included portionwise in multiple times, the type of the polar solvent or the foaming agent to be included and the method of the inclusion may be the same or different.

In the production method of the present embodiment, from the viewpoint of controlling the amount of the polar solvent to an optimum value, it is preferable that the polar solvent is made to be further included into a solvent and foaming agent-including polyamide resin into which the polar solvent and the foaming agent are made to be included to obtain a foamable polyamide resin, followed by foaming of the foamable polyamide resin.

In the production method of the present embodiment, from the viewpoint of facilitating inclusion of the foaming agent, the step of making the polar solvent to be included and the step of making the foaming agent to be included are preferably separate steps.

In the present specification, a polyamide resin in which a polar solvent is made to be included into a raw material polyamide resin may be referred to as a "solvent-including polyamide resin", a polyamide resin in which a foaming agent is made to be included into a raw material polyamide resin may be referred to as a "foaming agent-including polyamide resin", and a polyamide resin in which a polar solvent and a foaming agent are made to be included into a raw material polyamide resin may be referred to as a "solvent and foaming agent-including polyamide resin". In addition, a polyamide resin into which a polar solvent or a foaming agent has been made to be included may be referred to as a "foamable polyamide resin". A solvent and foaming agent-including polyamide resin into which a polar solvent or a foaming agent is not made to be additionally included is a foamable polyamide resin. However, a solvent and foaming agent-including polyamide resin into which a polar solvent or a foaming agent is made to be additionally included is not referred to as a foamable polyamide resin.

Note that a solvent-including polyamide resin, a foaming agent-including polyamide resin, a solvent and foaming agent-including polyamide resin, and a foamable polyamide resin described above refer to a polyamide resin into which a solvent or a foaming agent is made to be intentionally included.

Hereinafter, a raw material or the like used in the method of producing polyamide resin foamable particles of the present embodiment will be described.

(Polyamide resin)

A polyamide resin serving as the raw material before a polar solvent and a foaming agent are made to be included (sometimes referred to as a "raw material polyamide resin" in the present specification) will be described.

The structure of the polyamide resin contained in the polyamide resin foamable particles may or may not be varied from the structure of the raw material polyamide resin in the step of making the polar solvent to be included, the step of making the foaming agent to be included, the step of foaming, and the like.

Examples of the raw material polyamide resin include polyamide homopolymers, polyamide copolymers, and mixtures thereof.

Examples of polyamide homopolymers include those obtained through polycondensation of a diamine and a dicarboxylic acid, such as nylon 66, nylon 610, nylon 612, nylon 46, and nylon 1212; and those obtained through lactam ring-opening polymerization, such as nylon 6 and nylon 12, for example.

Examples of polyamide copolymers include nylon 6/66, nylon 66/6, nylon 66/610, and nylon 66/612, for example. Of these, aliphatic polyamides are preferable, and nylon 6, nylon 66, nylon 6/66, nylon 66/6, and the like are more preferable.

These may be used alone or in combination of two or more.

The melting point of the raw material polyamide resin is preferably 170 °C or higher, more preferably 180 °C or higher from the viewpoint of reducing coloring of the polyamide resin foamable particles and achieving a sufficient heat resistance of the foam molded article, and is preferably 270 °C or lower, more preferably 250 °C or lower from the viewpoint of facilitating foaming of a foaming agent-including polyamide resin which is unfoamed.

In this specification, the melting point of the polyamide resin is a value measured in accordance with JIS K7121 by differential scanning calorimetry (DSC). Peaks appearing in measurement that indicate heat absorption are determined to be peaks that indicate melting of the resin, and the melting point is determined to be the temperature corresponding to a peak indicating heat absorption that appears at a highest temperature.

Am example of the measurement apparatus may be a commercially available differential scanning calorimeter such as DSC manufactured by PerkinElmer Inc.

The measurement conditions may be commonly used conditions. For example, an inert gas atmosphere may be adopted. The temperature conditions may be such that the resin is held at a temperature higher than the melting point thereof (e.g., held at 300 °C for 5 minutes), is subsequently cooled rapidly to approximately 50 °C at 20 °C/min, and is then heated to a temperature higher than the melting point (e.g., to 300 °C) at 20 °C/min.

(Other components)

Components other than the polyamide resin may be contained into the raw material polyamide resin to the extent that the objectives of the present disclosure are not impeded. Examples include stabilizers, impact modifiers, flame retardants, lubricants, pigments, dyes, weather resistance modifiers, antistatic agents, impact resistance modifiers, crystal nucleating agents, glass beads, inorganic fillers, crosslinking agents, nucleating agents such as talc, and other thermoplastic resins.

Examples of the stabilizer include organic antioxidants and heat stabilizers such as hindered phenol antioxidants, sulfuric antioxidants, phosphoric antioxidants, phosphite compounds, and thioether compounds; light stabilizers and ultraviolet absorbers such as those based on hindered amines, benzophenone, and imidazole; and metal deactivators.

These may be used alone or in combination of two or more.

The content of the other components described above in the raw material polyamide resin may be 15 parts by mass or less, and is preferably 6 parts by mass or less, more preferably 3 parts by mass or less, per 100 parts by mass of the polyamide resin.

The raw material polyamide resin may be mixed to a uniform mixture after each component is added.

From the viewpoint of facilitating the step of making the polar solvent and/or the foaming agent to be included, the raw material polyamide resin may be melt-kneaded and extruded into strands, which are then processed into pellets. The diameter of the pellets is preferably 1.5 mm or less, more preferably 1.0 mm or less, and even more preferably 0.9 mm or less.

Note that a compound, a polymer, or the like having a substituent that can react with an amino group or a carboxyl group in the polyamide resin may be used to form a crosslinked structure by means of that substituent in the molecular of the resin, thereby increasing the degree of crosslinking of the resin.

(Polar solvent)

From the viewpoint of facilitating uniform inclusion of the polar solvent into the polyamide resin to provide polyamide resin foamable particles which can be foamed at a low foaming temperature, the polar solvent is preferably made to be included into the polyamide resin after being polymerized.

Examples of the polar solvent include protic polar solvents such as water and alcohols, e.g., methanol, ethanol, and isopropanol; and aprotic polar solvents such as acetone, acetone dichloromethane, tetrahydrofuran, ethyl acetate, dimethylformamide, acetonitrile, and dimethyl sulfoxide. Among these, water, methanol, isopropanol, and acetone are preferred from the viewpoint that polyamide resin foamable particles which have an excellent impregnation property to polyamide, can reduce the foaming temperature, and provide a particularly excellent effect of preventing coloring of the polyamide resin foamable particles to yellow, and a particularly high closed cell ratio.

These polar solvents may be used alone or in combination of two or more.

The method of making the polar solvent to be included in the raw material polyamide resin is not particularly limited, and examples thereof include a method of immersing the raw material polyamide resin in the polar solvent (e.g., in the solvent at a temperature of 30 to 80 °C) for a predetermined time duration (e.g., 0.5 to 10 hours), a method of storing in a high temperature and humidified environment (e.g., at a temperature of 30 to 50 °C and a relative humidity of 50 to 95%) for a certain time duration, and a method of blowing a vapor of the polar solvent for a certain time duration. Alternatively, a method may be employed in which the polar solvent is made to be included after the foaming agent is made to be included.

(Foaming agent)

The foaming agent is not particularly limited, and a foaming gas such as air or a compound which can assume a gaseous state is preferred.

Examples of compounds which can assume a gaseous state include inorganic compounds such as carbon dioxide, nitrogen, oxygen, hydrogen, argon, helium, and neon; fluorocarbons such as trichlorofluoromethane (R11), dichlorodifluoromethane (R12), chlorodifluoromethane (R22), tetrachlorodifluoroethane (R112), dichlorofluoroethane (R141b), chlorodifluoroethane (R142b), difluoroethane (R152a), HFC-245fa, HFC-236ea, HFC-245ca, and HFC-225ca; hydrofluoroolefins such as HFO-1234y and HFO-1234ze(E); saturated hydrocarbons such as propane, n-butane, i-butane, n-pentane, i-pentane, and neopentane; ethers such as dimethyl ether, diethyl ether, methyl ethyl ether, isopropyl ether, n-butyl ether, diisopropyl ether, furan, furfural, 2-methylfuran, tetrahydrofuran, and tetrahydropyran; and chlorinated hydrocarbons such as methyl chloride and ethyl chloride.

The air or compounds that can assume a gaseous state may be used alone or in combination of two or more.

The foaming agent is preferably a foaming agent that has low environmental impact and is not flammable or combustion-supporting, is more preferably an inorganic compound that is not flammable or combustion-supporting from a viewpoint of safety during handling, and is particularly preferably carbon dioxide or nitrogen from a viewpoint of solubility in resin and ease of handling.

Hereinafter, specific manufacturing steps in the method of producing the polyamide resin foamable particles of the present embodiment will be described.

The method of producing the polyamide resin foamable particles of the present embodiment is preferably a method including making the foaming agent to be included into a solvent-including polyamide resin into which the polar solvent has been made to be included to thereby obtain a foamable polyamide resin, and then foaming the foamable polyamide resin (first production method)

The first production method is not particularly limited as long as the polar solvent and the foaming agent are made to be included in the raw material polyamide resin in this order. For example, the foaming agent may be made to be included into a solvent-including polyamide resin to prepare a solvent and foaming agent-including polyamide resin, and then the polar solvent and/or the foaming agent may be made to be further included into prepare a foamable polyamide resin. In the case where the polar solvent and/or the foaming agent are made to be included portionwise in multiple times, the type of the polar solvent or the foaming agent to be included and the method of the inclusion may be the same or different.

The method of producing the polyamide resin foamable particles of the present embodiment may be a method including making the polar solvent and the foaming agent simultaneously be included to obtain a foamable polyamide resin, and then foaming the foamable polyamide resin (second production method)

It is suffice that the second production method includes the step of making the polar solvent and the foaming agent simultaneously to be included into the raw material polyamide resin. For example, the polar solvent and the foaming agent may be made to be included in the raw material polyamide resin to prepare a solvent and foaming agent-including polyamide resin, and then the polar solvent and/or the foaming agent may be made to be further included to prepare a foamable polyamide resin. In the case where the polar solvent and/or the foaming agent are made to be included portionwise in multiple times, the type of the polar solvent or the foaming agent to be included and the method of the inclusion may be the same or different.

The method of producing the polyamide resin foamable particles of the present embodiment may be a method including making the polar solvent to be included into a foaming agent-including polyamide resin into which the foaming agent has been made to be included to thereby obtain a foamable polyamide resin, and then foaming the foamable polyamide resin (third production method)

The third production method is not particularly limited as long as the foaming agent and the polar solvent are made to be included in the raw material polyamide resin in this order. For example, polar solvent may be made to be included into a foaming agent-including polyamide resin to obtain a solvent and foaming agent-including polyamide resin, and then the polar solvent and/or the foaming agent may be made to be further included to prepare a foamable polyamide resin. In the case where the polar solvent and/or the foaming agent are made to be included portionwise in multiple times, the type of the polar solvent or the foaming agent to be included and the method of the inclusion may be the same or different.

In the production method of the present embodiment, the content mass ratio of the polar solvent included into the solvent-including polyamide resin (solvent absorption ratio) is preferably 3 mass% or more, more preferably 5 mass% or more, even more preferably 6 mass% or more, and particularly preferably 7 mass% or more, per 100 mass% of the polyamide resin in the solvent-including polyamide resin, from the viewpoint of further preventing coloring upon foaming. In addition, the content mass ratio is preferably 35 mass% or less, more preferably 30 mass% or less, even more preferably 25 mass% or less, still even more preferably 20 mass% or less, and particularly preferably 11 mass% or less from the viewpoint of achieving foamable particles having a high closed cell ratio.

Further, the content mass ratio of the polar solvent included into the foamable polyamide resin (solvent absorption ratio) is preferably 3 mass% or more, more preferably 5 mass% or more, even more preferably 6 mass% or more, and particularly preferably 7 mass% or more, per 100 mass% of the polyamide resin in the foamable polyamide, resin from the viewpoint of further preventing coloring upon foaming. In addition, the content mass ratio is preferably 35 mass% or less, more preferably 30 mass% or less, even more preferably 25 mass% or less, still even more preferably 20 mass% or less, and particularly preferably 11 mass% or less from the viewpoint of achieving foamable particles having a high closed cell ratio.

The content mass ratio of the polar solvent in the solvent-including polyamide resin or the foamable polyamide resin can be adjusted, for example, by adjusting the temperature of the polar solvent used for immersion, the time of immersion in the polar solvent, the conditions of storage after inclusion, and the like.

In the production method of the present embodiment, it is preferable that the polar solvent is included uniformly into the solvent-including polyamide resin from the viewpoint that the foaming temperature can be further lowered and coloring upon foaming can be further prevented. In addition, it is preferable that the polar solvent is included uniformly in the foamable polyamide resin from the same viewpoints.

For example, in a cross section of a pellet of a solvent-including polyamide resin or a foamable polyamide resin in an arbitrary direction, in a line segment which connects arbitrary two ends of the cross section so as to pass through the center of gravity of the cross section (the length of this line segment is defined as 100%), the content mass ratio of the polar solvent in the region from one end to 0 to 10% of the line segment and the content mass ratio in the region from the one end to 40 to 50% of the line segment are both within any of the above ranges.

The content mass ratio of the polar solvent in the respective regions can be determined by dissecting a sample and measuring the content mass ratios of the polar solvent in the dissected regions according to the method described in the following Examples.

The production method of the present embodiment preferably includes the step of removing at least a part of the polar solvent adhered to the surface (e.g., the surfaces of the foamable polyamide resin) before foaming the foamable polyamide resin. The first production method preferably includes the step of removing at least a part of the polar solvent adhered to a solvent and foaming agent-including polyamide resin or a foamable polyamide resin into which the polar solvent and the foaming agent have been made to be contained.

The polar solvent adhered to the resin surface is preferably removed after inclusion of the polar solvent into the polyamide resin. Removal of the solvent is preferably carried out after inclusion of the polar solvent and before foaming of the foamable polyamide resin. In the case where the polar solvent is made to be included portionwise in multiple times, the polar solvent may be removed in multiple times or the polar solvent may be removed at once. Particularly, from the viewpoint of the impregnation efficiency of the foaming agent, the polar solvent on the surface of the polyamide resin is preferably removed before impregnation of the foaming agent.

An example of the method of removing the polar solvent on the surface is a method of centrifugally removing the resin, for example.

The solvent-including polyamide resin may be used immediately after inclusion of the polar solvent in the next step, or may be stored for a certain period of time. An example of the storage may be a storage under an atmosphere in the presence of the polar solvent (e.g., under humidification), for example. Particularly, from the viewpoint of further lowering the foaming temperature and further preventing coloring upon foaming, after inclusion of the polar solvent, the resin is preferably used in the next step without interruption.

The method by which the foaming agent is made to be included into the solvent-including polyamide resin or the raw material polyamide resin is not specifically limited and a generally used method may be used. The solvent-including polyamide resin or the raw material polyamide resin when the foaming agent is made to be included may be dissolved or may be a solid such as pellets, but pellets are preferred.

Example of such a methods include a method in which an aqueous medium is used in a suspension of water or the like (suspension impregnation), a method in which a thermal decomposition-type foaming agent such as sodium bicarbonate is added (foaming agent decomposition), a method in which a gas is transitioned to a liquid phase in an atmosphere under a pressure equal or higher than the critical pressure and is brought into contact with the base material resin (liquid phase impregnation), and a method in which a gas is transitioned to a gas phase in an atmosphere under a pressure less than the critical pressure and is brought into contact with the base material resin (gas phase impregnation). The method of making the foaming agent to be included is particularly preferably gas phase impregnation.

Compared to suspension impregnation carried out under high-temperature conditions, gas phase impregnation makes it easier to obtain a high foaming agent content because the solubility of the foaming agent (e.g., foaming gas) into the solvent-including polyamide resin or the raw material polyamide resin is higher. Consequently, when gas phase impregnation is adopted, a high expansion ratio and uniform cell size in the obtained polyamide resin foamable particles are more likely to be achieved.

The foaming agent decomposition method is inconvenient as it is carried out under high-temperature conditions in the same way as suspension impregnation. Moreover, not all the thermal decomposition-type foaming agent that is added in the foaming agent decomposition method is converted to gas, and thus the amount of gas that is generated tends to be relatively small. Accordingly, gas phase impregnation is advantageous in terms that a high foaming agent content can be easily achieved and foamed particles in which a large number of bubbles are uniformly distributed are more likely to be obtained.

Moreover, compared to liquid phase impregnation, gas phase impregnation allows the use of more compact equipment (pressure-resistant apparatus, cooling apparatus, etc.) and facilitates equipment cost reduction.

Although the conditions of gas phase impregnation are not specifically limited, an ambient pressure from 0.5 MPa to 6.0 MPa and an ambient temperature from 5 °C to 30 °C are preferable from a viewpoint of achieving more efficient dissolution of the gas into the solvent-including polyamide resin or the raw material polyamide resin.

The ratio of the mass ratio of the foaming agent to the solvent-including polyamide resin (the concentration (mass%) of the included gas after the solvent is absorbed), to the content mass ratio of the foaming agent to a dried polyamide resin obtained by drying the solvent-including polyamide resin (the concentration (mass%) of the included gas after absolute drying) is preferably 50 to 99%, more preferably 60 to 95% The ratio of the mass ratio of the foaming agent to the foamable polyamide resin (the concentration (mass%) of the included gas after the solvent is absorbed), to the content mass ratio of the included gas to a dry polyamide resin obtained by drying the foamable polyamide resin (the concentration (mass%) of the included gas after absolute drying) is preferably 50 to 99%, more preferably 60 to 95%

Note that the concentration of the included gas after absorption of the solvent and the concentration of the included gas after absolute drying can be measured by the method described in the Examples section described later.

The second production method is preferably a method including a step of dispersing the raw material polyamide resin in the polar solvent in a sealed container to obtain a dispersion liquid, a step of making the foaming agent to be included (e.g., impregnated) into the polyamide resin in the dispersion liquid, and a suspension foaming step of releasing the foamable polyamide resin into which the foaming agent has been made to be included, together with the polar solvent, from the inside of the sealed container to a pressure lower than the pressure inside the sealed container to achieve foaming.

In the step of obtaining the dispersion of the second production method, the method of dispersing the raw material polyamide resin in the polar solvent is not particularly limited, and a well-known method can be used. For example, the dispersion liquid can be obtained by adding the raw material polyamide resin to the polar solvent while the polar solvent is stirred with an agitator, followed by further stirring.

A dispersing aid, such as a dispersing agent, e.g., an inorganic substance such as aluminum oxide, calcium tertiary phosphate, magnesium pyrophosphate, zinc oxide, kaolin, mica, talc, and smectite; a sodium alkylbenzenesulfonate such as sodium dodecylbenzenesulfonate; or an anionic surfactant such as sodium alkanesulfonate is preferably added to the dispersion.

The mass ratio of the raw material polyamide resin to the dispersing agent (ratio of raw material polyamide resin / dispersing agent) in the dispersion liquid is preferably 20 to 2000, more preferably 30 to 1000 Further, the mass ratio of the dispersing agent to the dispersion aid (the ratio of dispersing agent / dispersion aid) is preferably 1 to 500, more preferably 1 to 100

The step of making the foaming agent to be included into the second production method is a step of making the polar solvent to be included into the polyamide resin in the dispersion liquid, as well as making the foaming agent to be included into the polyamide resin. Although there is no particular limitation on the method of making the foaming agent to be included into the polyamide resin, it is preferable that the polyamide resin is dispersed in the polar solvent in a pressurizable sealed container such as an autoclave so as to make the foaming agent to be included into the polyamide resin. From the viewpoint of making sufficient foaming agent to be included into the polyamide resin in shorter time, the inclusion of the foaming agent in the polyamide resin is preferably carried out under heating and under pressure.

When pressurizing, the step of making the foaming agent to be included includes a step of changing the pressure in the sealed container from the atmospheric pressure to the pressure during inclusion (hereinafter, also referred to as the impregnation pressure).

Further, the step of making the foaming agent to be included includes a step of heating the dispersion liquid where the polyamide resin is dispersed in the polar solvent from normal temperature to a temperature during impregnation (hereinafter, also referred to as the impregnation temperature).

From the viewpoint of making sufficient foaming agent to be included into the polyamide resin in shorter time, the temperature during inclusion carried out under heating is preferably 50 °C or higher, more preferably 80 °C or higher, and is preferably equal to or lower than the melting point of the polyamide resin (Tm (°C)), more preferably (Tm - 20 (°C)) or lower.

In addition, from the viewpoint of making sufficient foaming agent to be included into the polyamide resin in shorter time, the pressure during the pressurized inclusion is preferably adjusted by introducing the foaming agent to the container containing the dispersion such that the pressure in the sealed container becomes 1.5 MPa (G) or more, more preferably 2.5 MPa (G) or more, and preferably 7.0 MPa (G) or less, and more preferably 5.0 MPa (G) or less.

It should be noted that "1.5 MPa (G)" means 1.5 MPa at the gauge pressure.

The method of foaming the foamable polyamide resin is not particularly limited. For example, examples include a method of causing the gas dissolved in the foamable polyamide resin as the foaming agent to expand by abruptly bringing the foamable polyamide resin from the high pressure atmosphere to a low pressure atmosphere to induce foaming, a method of causing the gas in the foamable polyamide resin to be expanded through heating with pressurized vapor, hot air, or the like, to induce foaming.

In particular, it is preferable to use the latter method of heating to induce foaming because the advantage of uniformizing the size of cells (cell size) inside the obtained polyamide resin foamable particles and the advantage of controlling the foaming magnification to thereby facilitating the production of polyamide resin foamable particles having a low foaming magnification are achieved.

In foaming of the polyamide resin foamable particles to obtain a desired expansion ratio, foaming may be performed in a single stage, or multi-stage foaming including secondary foaming, tertiary foaming, and so forth may be performed.

In particular, in a situation in which multi-stage foaming is performed, it is preferable that at each stage, the polyamide resin foamable particles are pressurized with the foaming agent (preferably foaming gas) prior to foaming. Although no specific limitations are placed on the foaming gas that is used in the pressurizing other than being a gas that is inert to the polyamide resin, an inorganic gas or hydrofluoroolefin having high safety as a gas and low global warming potential as a gas is preferable. Examples of inorganic gases include air, carbon dioxide gas, nitrogen gas, oxygen gas, ammonia gas, hydrogen gas, argon gas, helium gas, and neon gas. Examples of hydrofluoroolefins include HFO-1234y and HFO-1234ze(E). In particular, air and carbon dioxide gas are preferable in terms of ease of handling and cost. Examples of the method of pressuring include, but are not specifically limited to, a method in which the foamable particles are loaded into a pressure tank and the gas is supplied into the tank.

In the production method of the present embodiment, the temperature upon foaming the foamable polyamide resin is preferably (Tm - 30) °C or higher and (Tm + 10) °C or lower, more preferably (Tm - 25 °C) or higher and (Tm + 5 °C) or lower, and even more preferably (Tm - 25 °C) or higher and Tm or less, where Tm is the melting point of the polyamide resin (for example, raw material polyamide resin).

In the second production method, the step of foaming is a step of foaming the polyamide resin in which the foaming agent has been made to be included.

Although there is no particular limitation on the method of foaming the polyamide resin, the direct foaming method is preferred. In this method, the polyamide resin is released in a pressure atmosphere (typically in atmospheric pressure) which is lower than the pressure in the step of making the foaming agent to be included and holding the polyamide resin together with the polar solvent.

In the second production method, the temperature Te of the dispersion liquid immediately prior to foaming (hereinafter, also referred to as the foaming temperature) is equal to or higher than the temperature which is lower than the melting point (Tm) of the polyamide resin by 90 °C (Tm - 90 °C), preferably by 80 °C (Tm - 80 °C), more preferably by 70 °C (Tm - 70 °C), and even more preferably by 65 °C (Tm - 65 °C), from the viewpoint of providing polyamide resin foamable particles having a low apparent density and having a high closed cell ratio.

Further, the foaming temperature is lower than the temperature which is lower than the melting point (Tm) of the polyamide resin by 50 °C (Tm - 50 °C), and is preferably equal to lower than the lower than the melting point by 55 °C (Tm - 55 °C), more preferably by 57 °C (Tm - 57 °C), and even more preferably by 59 °C (Tm - 59 °C).

In the second production method, the pressure immediately before release in the step of foaming (foaming pressure) is preferably 0.5 MPa (G) or more, more preferably 1.5 MPa (G) or more, and even more preferably 2.5 MPa (G) or more. The foaming pressure is preferably 10.0 MPa (G) or less, more preferably 7.0 MPa (G) or less, and even more preferably 5 MPa (G) or less.

Because the production method of the present embodiment uses the foamable polyamide resin into which the polar solvent is made to be included, the foaming temperature can be lowered. The foaming temperature can be appropriately selected depending on the type of the polyamide resin or the foaming agent. For example, when a foamable polyamide resin into which the polar solvent is made to be included is compared to a polyamide resin containing the same polyamide resin and the foaming agent in the same mass ratio, resin foamable particles having equivalent physical properties can be obtained even if the foaming temperature is lowered by 10 °C or higher (preferably by 20 °C or higher).

(Physical properties)

Hereinafter, physical properties of the polyamide resin foamable particles obtained by the method of producing the polyamide resin foamable particles of the present embodiment will be described.

The closed cell ratio of the polyamide resin foamable particles is preferably 70% or more, more preferably 80% or more, and even more preferably 85% or more, from the viewpoint of maintaining a high expansion ability which serves as a barometer for moldability.

The average particle diameter of the polyamide resin foamable particles is preferably 0.5 to 1.3 mm, more preferably 0.6 to 1.3 mm, and even more preferably 0.7 to 1.3 mm from the viewpoint of making the polar solvent or the foaming gas to be uniformly included.

Note that the average particle diameter can be measured with a caliper. In the case where the polyamide resin foamable particles are spherical, measurements at arbitrary three locations are made. The average value of the sizes of 50 particles is determined as the average particle diameter. In the case where the polyamide resin foamable particles are cylindrical, diameters are measured at arbitrary three locations, and the average value of 50 particles are determined as the average particle diameter.

Polyamide resin foamable particles obtained by the production method of the present embodiment can be used for the bead foaming method, and a foam molded article can be obtained by the bead foaming method.

EXAMPLES

Hereinafter, the present disclosure will be described with reference to specific examples and comparative examples. However, the present disclosure is not so limited.

The physical properties of the resin compositions of the below-described Examples and Comparative Examples were measured with the following methods (A) to (G).

(A) Solvent absorption ratio

For the first production method, pellets of a raw material polyamide resin were dried for 24 hours in a hot air dryer at 60 °C, and the mass W (g) of the pellets was measured. Thereafter, a polar solvent was made to be included into the pellets of the thus treated solvent-including polyamide resin by the method described in Examples 1 to 11 or Comparative Examples below, and the mass Wa (g) was measured. The solvent absorption ratio of the polyamide resin was determined as the value $((Wa - W) / W) \times 100$ (mass%) determined by dividing the difference between the mass Wa of the solvent-including polyamide resin and the mass W of the raw material polyamide resin, by the mass W of the raw material polyamide resin.

Note that the solvent absorption ratio of the polyamide resin can also be calculated by measuring the mass Wa (g) of the pellets of the foamable polyamide resin into which the polar solvent is made to be included and then measuring the mass W (g) of the resin pellets dried for 24 hours in a hot air dryer at 60 °C.

For the second or third production method, the method of Examples 12 to 14 was carried out except that no foaming gas was used. The mass Wb (g) of the obtained pellets was measured. The solvent absorption ratio (estimated value) of the polyamide resin was determined as the value $((Wb - W) / W) \times 100$ (mass%) by dividing the difference between the mass Wb (g) of the raw material polyamide resin and the mass W, by the mass W of the raw material polyamide resin.

(B) Concentration of included gas

A polar solvent was made to be included into raw material polyamide resin pellets by each of the methods described in the following Examples and Comparative Examples to prepare polyamide resin pellets and the mass W' (g) thereof was measured. The mass W' b (g) of the foamable polyamide resin after the polar solvent and the foaming agent were made to be included was measured. The concentration of the included gas of the polyamide resin was determined as the value $((W'b - W') / W') \times 100$ (mass%) obtained by dividing the difference between the mass W' b and the mass W' of the foamable polyamide resin by the mass W'.

In addition, the foamable polyamide resin pellets were dried at 60 °C for 24 hours, and the mass of W'' (g) of the resultant the resin pellets was measured. The mass of a resin containing only the foaming agent in the same manner was measured using the resin pellets after the drying to be W''b (g). The concentration of the included gas after absolute drying was determined as the value $((W''b - W'') / W'') \times 100$ (mass%).

(C) Density

The mass W (kg) of obtained polyamide resin foamable particles was measured and then the apparent volume Va $(m^3)$ of the resin foamable particles was measured by the water immersion method. A value W/Va $(kg/m^3)$ calculated by dividing the mass W by the apparent volume Va was determined to be the density of the polyamide resin foamable particles.

(D) Closed cell ratio

The true volume (Vx) of resin foamable particles for which the apparent volume Va had been measured as previously described in (C) was measured using an air pycnometer (manufactured by Beckman Coulter, Inc.). The closed cell ratio S (%) was then calculated by the following formula.

$$S\ (\%) = \{(Vx - W/\rho)\ /\ (Va - W/\rho)\} \times 100$$

where $\rho$ is the density $(g/cm^3)$ of polyamide resin foamable particles.

(E) YI value

The yellowness of the polyamide resin foamable particles was calculated according to JIS K7373:2006 (determination of yellowness index and change of yellowness index). A higher YI value indicates a higher degree of yellow coloring.
ZE6000 manufactured by Nippon Denshoku Industries Co., Ltd. was used as the measurement apparatus.

(F) Fusion rate upon foaming

The fusion rate (%) was calculated from the ratio of the number of foamable particles having 2 or more particles adhered to each other among 200 particles in obtained polyamide resin foamable particles, 200 particles.

(G) Secondary foaming capability

The resultant polyamide polyamide resin foamable particles were pressurized by sealing the polyamide polyamide resin foamable particles in an autoclave, introducing compressed air into the autoclave over 1 hour so that the pressure inside the autoclave reached 0.9 MPa, and then maintaining the pressure at 0.9 MPa for 24 hours.
The foamable particles which had been pressurized were placed in an apparatus capable of pressurizing with saturated steam. Saturated steam at 100 to 130 °C was fed into the apparatus over 20 seconds, and the foamable particles were then kept for 10 seconds. The resultant (secondary) polyamide resin foamable particles were cured for 24 hours in an oven at 60 °C, and were then slowly cooled.
The density of the polyamide resin foamable particles was divided by the density of the obtained (secondary) polyamide resin foamable particles. Among 200 values obtained, the highest value among the temperatures of 100 to 130 °C was determined as the secondary foaming capability of the foamable particles.
The obtained secondary foaming capability was rated as follows: A (excellent) when the secondary foaming capability was 1.4 or more, B (good) when the secondary foaming capability was 1.2 or more and less than 1.4, and C (bad) when the secondary foaming capability was less than 1.2. Polyamide resin foamable particles with a higher secondary foaming capability are considered to be capable of providing better appearance of a molded article formed at a lower temperature.

(Example 1)

Resin pellets were prepared by using an extruder to melt-knead 100 parts by mass of nylon 6 (product name: UBE Nylon 1022B; manufactured by Ube Industries, Ltd.) as a polyamide resin and 0.8 parts by mass of talc as a nucleating agent under heated conditions, and to extrude the melt-kneaded product in the form of strands, which were then cooled by water in a cold-water tank and were cut.
The resin pellets were immersed in methanol at 30 °C for 1 hour, and the solvent was removed in a commercially-available washing machine to obtain resin pellets to which 4 mass% of methanol was made to be contained.
The resultant pellets were loaded into a pressure vessel at 10 °C. Carbon dioxide gas at 5 MPa was blown into the pellets to cause carbon dioxide to be absorbed for 3 hours so that 1.9 mass % was absorbed. The resin pellets having carbon dioxide gas included therein were then transferred to a foaming apparatus, and the air at 230 °C was blown for 20 seconds to produce polyamide resin polyamide resin foamable particles.

The evaluation results of the polyamide resin foamable particles in Example 1 are summarized in Table 1.

(Example 2)

Polyamide resin foamable particles were obtained in the same manner as in Example 1, except that 6 mass% of methanol was made to be included, 1.8 mass% of carbon dioxide gas was made to be included, and the air at 220 °C was blown.

The evaluation results of the polyamide resin foamable particles in Example 2 are summarized in Table 1.

(Example 3)

Polyamide resin foamable particles were obtained in the same manner as in Example 1, except that 10 mass% of methanol was made to be included, 1.5 mass% of carbon dioxide gas was made to be included, and the air at 210 °C was blown.

The evaluation results of the polyamide resin foamable particles in Example 3 are summarized in Table 1.

(Example 4)

Polyamide resin foamable particles were obtained in the same manner as in Example 1, except that 20 mass% of methanol was made to be included, 1.4 mass% of carbon dioxide gas was made to be included, and the air at 210 °C was blown.

The evaluation results of the polyamide resin foamable particles in Example 4 are summarized in Table 1.

(Example 5)

Polyamide resin foamable particles were obtained in the same manner as in Example 1, except that 30 mass% of methanol was made to be included, 1.3 mass% of carbon dioxide gas was made to be included, and the air at 200 °C was blown.

The evaluation results of the polyamide resin foamable particles in Example 5 are summarized in Table 1.

(Example 6)

Resin pellets were prepared by using an extruder to melt-knead 100 parts by mass of a copolymer of nylon 6 and nylon 66 (product name: Novamid 2330J; manufactured by DSM) as a polyamide resin and 0.8 parts by mass of talc as a nucleating agent under heated conditions, and to extrude the melt-kneaded product in the form of strands, which were then cooled by water in a cold-water tank and were cut.

The resin pellets were immersed in methanol at 30 °C for 1 hour, and the solvent was removed in a commercially-available washing machine to obtain resin pellets to which 12 mass% of methanol was made to be contained.

The resultant pellets were loaded into a pressure vessel at 10 °C. Carbon dioxide gas at 5 MPa was blown into the pellets to cause carbon dioxide to be absorbed for 3 hours so that 1.5 mass % was absorbed. The resin pellets having carbon dioxide gas included therein were then transferred to a foaming apparatus, and the air at 180 °C was blown for 20 seconds to produce polyamide resin polyamide resin foamable particles.

The evaluation results of the polyamide resin foamable particles in Example 6 are summarized in Table 1.

(Example 7)

Polyamide resin foamable particles were obtained in the same manner as in Example 1, except that 6 mass% of acetone was made to be included, 1.8 mass% of carbon dioxide gas was made to be included, and the air at 220 °C was blown.

The evaluation results of the polyamide resin foamable particles in Example 7 are summarized in Table 1.

(Example 8)

Polyamide resin foamable particles were obtained in the same manner as in Example 1, except that 10 mass% of acetone was made to be included, 1.5 mass% of carbon dioxide gas was made to be included, and the air at 210 °C was blown.

The evaluation results of the polyamide resin foamable particles in Example 8 are summarized in Table 1.

(Example 9)

Polyamide resin foamable particles were obtained in the same manner as in Example 1, except that 8 mass% of water was made to be included, 1.6 mass% of carbon dioxide gas was made to be included, and the air at 220 °C was blown.

The evaluation results of the polyamide resin foamable particles in Example 8 are summarized in Table 1.

(Example 10)

Polyamide resin foamable particles were obtained in the same manner as in Example 1, except that 5 mass% of water was made to be included, 1.8 mass% of carbon dioxide gas was made to be included, and the air at 220 °C was blown.

The evaluation results of the polyamide resin foamable particles in Example 10 are summarized in Table 1.

(Example 11)

Polyamide resin foamable particles were obtained in the same manner as in Example 1, except that 15 mass% of water was made to be included, 1.5 mass% of carbon dioxide gas was made to be included, and the air at 210 °C was blown.

The evaluation results of the polyamide resin foamable particles in Example 11 are summarized in Table 1.

(Example 12)

Resin pellets were prepared by using an extruder to melt-knead 100 parts by mass of nylon 6 (product name: UBE Nylon 1022B; manufactured by Ube Industries, Ltd.) as a polyamide resin and 0.3 parts by mass of talc as a nucleating agent under heated conditions, and to extrude the melt-kneaded product in the form of strands, which were then cooled by water in a cold-water tank and were cut.

Into a 40-L autoclave equipped with an agitator, 1 kg of the obtained resin pellets and 31 L of water as a dispersion liquid were charged. Further, 3.0 parts by mass of kaolin as a dispersing agent and 0.8 parts by mass of sodium alkylbenzenesulfonate as a surfactant per 100 parts by mass of the resin pellets were added to the dispersion liquid. The temperature was increased from room temperature (23 °C) under stirring of the inside of the autoclave. After the temperature reached the temperature for including the foaming agent (158 °C), carbon dioxide as the foaming agent was introduced into the autoclave under pressurizing until the pressure reached 4 MPa. In this step, the time duration during which the temperature rose from room temperature (23 °C) to the temperature for including the foaming agent (158 °C) described in Table 1 was 30 minutes. Subsequently, the conditions of 4 MPa and 158 °C were kept for 15 minutes.

Thereafter, the resin pellets were released together with the dispersion liquid to atmospheric pressure (0.1 MPa) The obtained polyamide resin foamable particles were cured for 24 hours in an oven at 60 °C, and then gradually cooled to obtain a polyamide resin foamable particles.

The evaluation results of the polyamide resin foamable particles in Example 12 are summarized in Table 1. The amount of solvent absorbed was calculated by carrying out the same operation without addition of the foaming agent and using samples released under atmospheric pressure.

(Example 13)

Polyamide resin foamable particles were obtained in the same manner as in Example 10, except that the resin pellets were immersed in water at 30 °C before being charged into the autoclave, followed by solvent removal in a commercially available washing machine, and the temperature for including the foaming agent was changed to 125 °C.

The evaluation results of the polyamide resin foamable particles in Example 13 are summarized in Table 1.

(Example 14)

Resin pellets were prepared by using an extruder to melt-knead 100 parts by mass of nylon 6 (product name: UBE Nylon 1022B; manufactured by Ube Industries, Ltd.) as a polyamide resin and 0.8 parts by mass of talc as a nucleating agent under heated conditions, and to extrude the melt-kneaded product in the form of strands, which were then cooled by water in a cold-water tank and were cut.

The resultant pellets were loaded into a pressure vessel at 10 °C. Carbon dioxide gas at 5 MPa was blown into the pellets to cause carbon dioxide to be included for 24 hours. Thereafter, the resin pellets were immersed in water at 30 °C, followed by solvent removal in a commercially available washing machine to obtain a resin pellets containing 10 mass% of water.

The resin pellets having carbon dioxide gas included therein were then transferred to a foaming apparatus, and the air at 210 °C was blown for 20 seconds to produce polyamide resin polyamide resin foamable particles.

The evaluation results of the polyamide resin foamable particles in Example 14 are summarized in Table 1.

(Comparative Example 1)

Polyamide resin foamable particles were obtained in the same manner as in Example 1, except that methanol was not made to be included in the resin pellets and the air at 240 °C was blown.

The evaluation results of the polyamide resin foamable particles in Comparative Example 1 are summarized in Table 1.

(Comparative Example 2)

Polyamide resin foamable particles were obtained in the same manner as in Example 1, except that methanol was not made to be included in the resin pellets and the air at 230 °C was blown.

The evaluation results of the polyamide resin foamable particles in Comparative Example 1 are summarized in Table 1.

Table 1

| | | | | Example 1 | Example 2 | Example 3 | Example 4 | Example 5 | Example 6 | Example 7 | Example 8 | Example 9 | Example 10 | Example 11 | Example 12 | Example 13 | Example 14 | Comp. Example 1 | Comp. Example 2 |
|---|---|---|---|---|---|---|---|---|---|---|---|---|---|---|---|---|---|---|---|
| Polyamide resin | PA6 | parts by mass | | 100 | 100 | 100 | 100 | 100 | - | 100 | 100 | 100 | 100 | 100 | 100 | 100 | 100 | 100 | 100 |
| | PA6/66 | parts by mass | | - | - | - | - | - | 100 | - | - | - | - | - | - | - | - | - | - |
| Nucleating agent | Talc | parts by mass | | 0.8 | 0.8 | 0.8 | 0.8 | 0.8 | 0.8 | 0.8 | 0.8 | 0.8 | 0.8 | 0.8 | 0.3 | 0.3 | 0.8 | 0.8 | 0.8 |
| Polar solvent | | - | | Methanol | Methanol | Methanol | Methanol | Methanol | Methanol | Acetone | Acetone | Water | Water | Water | Water | Water | Water | None | None |
| Foaming agent | | - - | | $CO_2$ | $CO_2$ | $CO_2$ | $CO_2$ | $CO_2$ | $CO_2$ | $CO_2$ | $CO_2$ | $CO_2$ | $CO_2$ | $CO_2$ | $CO_2$ | $CO_2$ | $CO_2$ | $CO_2$ | $CO_2$ |
| Method of impregnating foaming agent | | - | | Gas phase impregnation | Gas phase impregnation | Gas phase impregnation | Gas phase impregnation | Gas phase impregnation | Gas phase impregnation | Gas phase impregnation | Gas phase impregnation | Gas phase impregnation | Gas phase impregnation | Gas phase impregnation | Suspension impregnate | Suspension impregnate | Gas phase impregnation | Gas phase impregnation | Gas phase impregnation |

EP 4 079 796 A1

14

(continued)

| | | | | Example 1 | Example 2 | Example 3 | Example 4 | Example 5 | Example 6 | Example 7 | Example 8 | Example 9 | Example 10 | Example 11 | Example 12 | Example 13 | Example 14 | Comp. Example 1 | Comp. Example 2 |
|---|---|---|---|---|---|---|---|---|---|---|---|---|---|---|---|---|---|---|---|
| Method of producing polyamide resin foamable particles | Manufacturing Conditions | Temperature for containing polar solvent | °C | 30 | 30 | 30 | 30 | 30 | 30 | 30 | 30 | 30 | 30 | 30 | 158 | 30 | 30 | - | - |
| | | Temperature for containing foaming agent | °C | 10 | 10 | 10 | 10 | 10 | 10 | 10 | 10 | 10 | 10 | 10 | 158 | 125 | 10 | 10 | 10 |
| | | Foaming temperature | °C | 230 | 220 | 210 | 210 | 200 | 180 | 220 | 210 | 220 | 220 | 210 | 158 | 125 | 210 | 240 | 230 |
| | | Melting point - foaming temperature | °C | -5 | 5 | 15 | 15 | 25 | 15 | 5 | 15 | 5 | 5 | 15 | 67 | 100 | 15 | -15 | -5 |
| | (A) Solvent absorption ratio of polyamide resin | | mass% | 4 | 6 | 10 | 20 | 30 | 12 | 6 | 10 | 8 | 5 | 15 | 3.9 | 10 | 10 | 0 | 0 |

(continued)

| | | Example 1 | Example 2 | Example 3 | Example 4 | Example 5 | Example 6 | Example 7 | Example 8 | Example 9 | Example 10 | Example 11 | Example 12 | Example 13 | Example 14 | Comp. Example 1 | Comp. Example 2 |
|---|---|---|---|---|---|---|---|---|---|---|---|---|---|---|---|---|---|
| (B) Concentration of included gas in polyamide resin | mass% | 1.9 | 1.8 | 1.5 | 1.4 | 1.3 | 1.5 | 1.8 | 1.5 | 1.6 | 1.8 | 1.5 | - | - | 1.2 | 2.0 | 2.0 |
| (B) Concentration of content gas after absolute drying | mass% | 2.0 | 2.0 | 2.0 | 2.0 | 2.0 | 22 | 2.0 | 2.0 | 2.0 | 2.0 | 2.0 | - | - | 2.0 | 2.0 | 2.0 |
| (B) Concentration of included gas polyamide resin / Concentration of included gas after | % | 95 | 90 | 75 | 70 | 65 | 68 | 90 | 75 | 80 | 80 | 80 | - | - | 60 | 100 | 100 |
| (c) Density absolute drying | Kg/m³ | 350 | 350 | 350 | 350 | 400 | 300 | 350 | 350 | 350 | 350 | 350 | 80 | 80 | 430 | 350 | 500 |
| (D) Closed cell ratio | % | 92 | 92 | 92 | 90 | 74 | 90 | 92 | 92 | 92 | 92 | 90 | 93 | 90 | 73 | 90 | 73 |
| Evaluation (E) YI value | - | 4.8 | 2.5 | 2.0 | 1.8 | 1.8 | 1.8 | 2.8 | 2.2 | 1.8 | 2.3 | 1.9 | 4.8 | 4.0 | 2.1 | 5.0 | 5.0 |
| (F) Fusion rate upon foaming | % | 0 | 0 | 0 | 0 | 5 | 0 | 0 | 0 | 0 | 0 | 0 | 15 | 8 | 2 | 20 | 15 |
| (G) Secondary foaming capability | - | A | A | A | A | B | A | A | A | A | A | A | A | A | B | C | C |

16

INDUSTRIAL APPLICABILITY

According to the method of producing polyamide resin foamable particles of the present disclosure, polyamide resin foamable particles can be produced at a low foaming temperature. The obtained polyamide resin foamable particles can be used as a raw material of a resin molded article.

**Claims**

1.   A method of producing polyamide resin foamable particles comprising:
foaming a foamable polyamide, into which a polar solvent and a foaming agent are made to be included, into a polyamide resin.

2.   The method of producing polyamide resin foamable particles according to claim 1, comprising making the foaming agent to be included into a solvent-including polyamide resin, into which the polar solvent is made to be included, to obtain the foamable polyamide resin.

3.   The method of producing polyamide resin foamable particles according to claim 1, comprising making a polar solvent to be further included in a solvent and foaming agent-including polyamide resin, into which the polar solvent and the foaming agent are made to be impregnated, to obtain the foamable polyamide resin.

4.   The method of producing polyamide resin foamable particles according to any one of claims 1 to 3, wherein the step of making the polar solvent to be included and the step of making the foaming agent to be included are separate steps.

5.   A method of producing polyamide resin foamable particles according to any one of claims 1 to 4, comprising the step of removing at least a portion of the polar solvent adhered to a surface before the foaming the foamable polyamide resin.

6.   The method of producing polyamide resin foamable particles according to any one of claims 1 to 5, wherein an average particle diameter of the polyamide resin foamable particles is 0.5 to 1.3 mm.

7.   The method of producing polyamide resin foamable particles according to any one of claims 1 to 6, wherein a temperature upon the foaming is (Tm - 30) °C to (Tm + 10) °C where Tm is a melting point of the polyamide resin.

8.   The method of producing polyamide resin foamable particles according to any one of claims 1 to 7, wherein a mass ratio of the polar solvent in the foamable polyamide resin is 3 to 30 mass% per 100 mass% of the polyamide resin.

## INTERNATIONAL SEARCH REPORT

| International application No. |
| --- |
| PCT/JP2020/047158 |

A.  CLASSIFICATION OF SUBJECT MATTER
C08J 9/18(2006.01)i
FI: C08J9/18 CFG

According to International Patent Classification (IPC) or to both national classification and IPC

B.  FIELDS SEARCHED

Minimum documentation searched (classification system followed by classification symbols)
C08J9/00-9/42; B29C44/00-44/60

Documentation searched other than minimum documentation to the extent that such documents are included in the fields searched
Published examined utility model applications of Japan          1922-1996
Published unexamined utility model applications of Japan          1971-2021
Registered utility model specifications of Japan          1996-2021
Published registered utility model applications of Japan          1994-2021

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>A | JP 61-268737 A (ASAHI KASEI INDUSTRY CO., LTD.) 28 November 1986 (1986-11-28) claims, page 2, lower right column, line 5 to page 3, upper right column, line 13, examples | 1-4, 6-8<br>5 |
| X<br>A | JP 7-179645 A (GUNZE LIMITED) 18 July 1995 (1995-07-18) claims, paragraphs [0015]-[0019], examples | 1, 2, 4-8<br>3 |
| X | WO 2016/052387 A1 (SEKISUI KASEI CO., LTD.) 07 April 2016 (2016-04-07) claims, paragraphs [0030], [0036], [0037], examples | 1-8 |
| A | JP 2011-105879 A (ASAHI KASEI CHEMICALS CORP.) 02 June 2011 (2011-06-02) entire text | 1-8 |

☐  Further documents are listed in the continuation of Box C.          ☒  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 08 March 2021 (08.03.2021) | 23 March 2021 (23.03.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

International application No.

PCT/JP2020/047158

| Patent Documents referred in the Report | Publication Date | Patent Family | Publication Date |
|---|---|---|---|
| JP 61-268737 A | 28 Nov. 1986 | (Family: none) | |
| JP 7-179645 A | 18 Jul. 1995 | (Family: none) | |
| WO 2016/052387 A1 | 07 Apr. 2016 | US 2017/0283555 A1 claims, paragraphs [0072], [0089]-[0095], examples EP 3202835 A1 KR 10-2017-0036090 A CN 106687511 A | |
| JP 2011-105879 A | 02 Jun. 2011 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H02024329 A